# EUROPÄISCHE PATENTSCHRIFT

(11) **EP 2 774 900 B1**
(45) Veröffentlichungstag und Bekanntmachung des Hinweises auf die Patenterteilung: **03.08.2016**
(21) Anmeldenummer: 14155374.3
(22) Anmeldetag: 17.02.2014
(51) Int. Cl.: C04B 41/85, C04B 41/86, C04B 41/00, C04B 41/50, C04B 35/101, C04B 35/14, C04B 35/48, C04B 35/634, C04B 111/00, C04B 28/00, C04B 28/34, C04B 35/66, C04B 35/185, C04B 35/565, C04B 35/622, C04B 35/63, C04B 35/636, C04B 35/18

(54) **Beschichtungsversatz zur Beschichtung Kohlenstoff- und/oder Siliciumcarbid haltiger feuerfester Erzeugnisse sowie Verwendung des Versatzes**
Coating additive for coating fire resistant products containing carbon and/or silicon carbide and use of the offset
Embout de revêtement pour le revêtement de produits ignifugés contenant du carbure de carbone et/ou de silicium et utilisation de l'embout

(30) Priorität: 05.03.2013 DE 102013003722
(43) Veröffentlichungstag der Anmeldung: 10.09.2014
(73) Patentinhaber: Refratechnik Holding GmbH, 85737 Ismaning (DE)
(72) Erfinder: ROLLMANN, Steffen, 56637 Plaidt (DE); KESSELHEIM, Bertram, 53557 Bad Hönningen (DE)
(74) Vertreter: Patent- und Rechtsanwälte Dr. Solf & Zapf

(56) Entgegenhaltungen:
- EP-A1- 2 690 078
- BG-A1- 50 552
- CN-A- 102 020 480
- GB-A- 1 156 445
- GB-A- 1 356 264
- US-A- 4 780 142

## Beschreibung

Die Erfindung betrifft einen Beschichtungsversatz zur Beschichtung Kohlenstoff- und/oder Siliciumcarbid (SiC)-haltiger feuerfester Erzeugnisse zum Schutz gegen Oxidation des Kohlenstoffs während einer Aufheizphase einer das feuerfeste Erzeugnis aufweisenden Neuzustellung eines Aggregats für thermische Prozesse, z. B. eines Schmelze aufnehmenden Aggregats eines Hüttenwerkes.

Aggregate für thermische Prozesse, mit denen die Erfindung befasst ist, sind insbesondere Metallschmelze aufnehmende Aggregate, wie Stahlpfannen, Rinnensysteme der Roheisenerzeugung, Roheisenmischer, Roheisentransportgefäße, Konverter, Kupolöfen oder Schmelzöfen, wie Metalischmelzöfen, oder Brennöfen, wie Zement-, Magnesia-, Doloma-, Kalkerzeugungsöfen.

Ein feuerfestes Erzeugnis ist ein aus feuerfesten mineralischen Werkstoffen hergestelltes Produkt.

Kohlenstoff- und/oder Siliciumcarbid haltige feuerfeste Erzeugnisse sind aus mineralischen feuerfesten Werkstoffen hergestellte Erzeugnisse, die neben Kohlenstoff und/oder SiC hauptsächlich mindestens ein mineralisches, feuerfestes Zuschlagstoffgranulat und ggf. mindestens ein Bindemittel aufweisen.

Es wird grundsätzlich unterschieden zwischen geformten und ungeformten feuerfesten Kohlenstoff- und/oder Siliciumcarbid haltigen Erzeugnissen. Eine weitere Unterteilung dabei betrifft basische und nicht basische Erzeugnisse (Geraid Routschka, Hartmut Wuthnow, Praxishandbuch Feuerfeste Werkstoffe, 5. Auflage, Vulkan-Verlag, 2011).

Ein Versatz ist ein trockenes Gemenge bzw. Gemisch aus den für das feuerfeste Erzeugnis erforderlichen Werkstoffen.

Eine feuerfeste Neuzustellung ist eine erstmalige Auskleidung oder eine Reparaturauskleidung z. B. eines Brennaggregats, eines Schmelzaggregats oder eines Schmelze-Transportaggregats, oder eines Wärmebehandlungsaggregats mit feuerfesten Erzeugnissen.

Der Begriff "kohlenstoffhaltig" beinhaltet, dass das feuerfeste Erzeugnis neben den feuerfesten Werkstoffen Graphit oder Ruß und/oder ein Kohlenstoff haltiges, bei Temperaturerhöhung verkokendes Bindemittel (Kunstharze) und/oder weitere Kohlenstoffträger als Additiv zur Antibenetzung aufweist.

Der Kohlenstoff in diesen feuerfesten Erzeugnissen, insbesondere in Form von Graphit, Ruß und aus Bindemitteln entstandenem Koksgerüst soll eine anti-benetzende Wirkung gegen Schmelzen und/oder Schlacken gewährleisten und außerdem die Temperaturwechselbeständigkeit der feuerfesten Erzeugnisse verbessern.

Der Kohlenstoff in den feuerfesten Erzeugnissen neigt zur Oxidation mit Sauerstoff, z. B. mit Luftsauerstoff. Bei einem Sauerstoffangebot oxidiert der Kohlenstoff ab Temperaturen von etwa 400 °C, wobei die anti-benetzende Eigenschaft und bei geformten Produkten auch die Bindewirkung des aus den verkokenden Bindemitteln entstandene Koksgerüsts, das eine feste Verbindung zwischen den feuerfesten Bestandteilen des feuerfesten Erzeugnisses gewährleistet, schwindet.

Bei einigen Anwendungen derartiger feuerfester Erzeugnisse als Auskleidung von Schmelze, z. B. Roheisen oder Stahl, oder mineralisches Brenngut, z. B. Zementrohmaterial od. dgl., aufnehmenden Aggregaten erfolgt vor der Aufnahme eine Aufheizung. Diese Aufheizung dient der Vermeidung eines Temperaturschocks bei der Aufnahme von Schmelze oder der erstmaligen Befeuerung eines Aggregats. Die Aufheizung dient außerdem bei herstellungsbedingt Porenwasser enthaltenden feuerfesten Erzeugnissen dazu, das Porenwasser auszutreiben, ohne dass der Dampfdruck in der Matrix der feuerfesten Erzeugnisse die Matrix z. B. durch Rissbildung schädigt. Der Aufheizvorgang geschieht in einer Luftatmosphäre. In Temperaturbereichen z. B. zwischen 400 und 1300 °C oxidiert bei derartigen unabdingbaren Aufheizprozessen der Kohlenstoff in Form von Abbrand.

Zur Vermeidung der Oxidation von Kohlenstoff in feuerfesten Erzeugnissen sind dauerhafte Glasurbeschichtungen entwickelt worden (z. B. DE 34 85 986 T2) und/oder Gefügeverdichtungen vorgenommen worden. Diese bekannten Methoden sollen die feuerfesten Erzeugnisse nachhaltig, d. h. langfristig, auch noch bei mehrfacher Aufnahme von Schmelze oder andauerndem Brennen von mineralischen Produkten wie Zement oder Erzen schützen. Diese dauerhaften Glasuren und Gefügeverdichtungen beeinträchtigen aber die Feuerfestqualität der Erzeugnisse.

Beschichtungen, mit denen sich die Erfindung befasst, sollen dagegen die feuerfesten Erzeugnisse nur beim Aufheizen einer Neuzustellung schützen und nach dem Aufheizvorgang von der Oberfläche der feuerfesten Erzeugnisse entfernt sein. Derartige bekannte Schutzbeschichtungen enthalten i. d. R. niedrigschmelzende Bohrverbindungen und sind nur bis zu relativ niedrigen Temperaturen bis z. B. 1000 °C anwendbar. Außerdem sind die Bohrverbindungen gesundheitsgefährdend, weshalb derartige Beschichtungsversätze kennzeichnungspflichtig sind nach EG-Richtlinien/GefStoffV.

Ein weiteres Problem mit derartigen bekannten Beschichtungen ist, dass sie auf Schalöirückstände aufweisenden Oberflächen von feuerfesten Erzeugnissen nicht oder nur lückenhaft haften, z. B. auf Oberflächen von Feuerbetonerzeugnissen, die mittels Schalungen geformt worden sind und dabei Schalöl verwendet worden ist, das nach der Ausschalung teilweise noch auf der Oberfläche des feuerfesten Erzeugnisses vorhanden ist.

Ein weiteres Problem ist, dass es eine Vielzahl von Kohlenstoff- und/oder SiC-haltigen feuerfesten Erzeugnissen gibt, die aufgrund unterschiedlicher Zusammensetzungen beim Aufheizen sich unterschiedlich verhalten, d. h. sich mehr oder weniger ausdehnen. Die Beschichtung muss auf diese unterschiedlichen Ausdehnungen eingestellt sein, damit sie während des Aufheizens rissefrei bleibt, bis eine Glasurschmelze entsteht, die Dehnungen des feuerfesten Erzeugnisses aufgrund ihrer Fließfähigkeit ohne weiteres folgen kann.

GB 1 356 264 A beschreibt einen Versatz aus Zirkonmehl und Quarzmehl und Natriumhexametaphosphat. Des Weiteren kann im Versatz Dextrin und Natriumcarboxymethylcellulose sowie Bindeton und weitere Additive enthalten sein. Der Versatz ist geeignet zur Herstellung einer wässrigen Beschichtungsmasse für Sand-Formschalen.

GB 1 156 445 A beschreibt einen wässrigen Anstrich für Gießformen. Der Versatz kann Zirkonmehl, Natriumhexametaphosphat, Natriumcarboxymethylcellulose, Bindeton und Hydroxylethylcellulose aufweisen.

CN 102020480 A beschreibt eine Gießmasse zur Verwendung als Zustellung elektrischer Öfen, die SiC enthält. Demgemäß enthält auch der Versatz SiC-Feinpulver, Al₂O₃-Mikropulver und SiO₂-Mikropulver sowie Natriumtripolyphosphat

Aufgabe der Erfindung ist, einen borfreien und bleifreien Beschichtungsversatz zu schaffen, der nur noch mit Flüssigkeit, z. B. Wasser, angemacht mit üblichen Auftragsverfahren wie Pinseln, Sprühen, Tauchen od. dgl. als vollflächige Beschichtung auf die Oberfläche eines feuerfesten Erzeugnisses aufgetragen werden kann, nach dem Auftragen gut auch auf Schalöl aufweisenden Oberflächen haftet, ohne Rissbildung beim Aufheizen bis Temperaturen von etwa 400 bis 500 °C bleibt, für durch Temperaturerhöhung aus den feuerfesten Erzeugnissen ausgetriebenes Wasser porig durchlässig während des Austreibens des Wassers ist und danach eine die Oberfläche des feuerfesten Erzeugnisses vor Sauerstoffzutritt schützende, porenfreie und rissefreie Glasur bildet, die bei Temperaturen um etwa 1000 bis 1300 °C nach der Aufheizperiode bei Inbetriebnahme des mit dem feuerfesten Erzeugnis ausgekleideten Aggregats von der ersten, die feuerfeste Auskleidung kontaktierenden Schmelze oder vom ersten kontaktierenden heißen Brenngut rückstandsfrei abgetragen werden kann, so dass danach das feuerfeste Erzeugnis des Aggregats mit seinen herstellungsbedingt eingestellten feuerfesten Eigenschaften zur Verfügung steht.

Diese komplexe Aufgabe wird durch einen Beschichtungsversatz gemäß Anspruch 1 gelöst.

Die erfindungsgemäßen Beschichtungsversätze beinhalten, dass der Hersteller oder Verwender der feuerfesten Erzeugnisse, der das Ausdehnungsverhalten des feuerfesten Erzeugnisses beim Aufheizen kennt, durch einfache Versuche die Zusammensetzung des Beschichtungsversatzes aus den angegebenen Versatzbereichen darauf abstellen und Optimierungen vornehmen kann.

Nach der Erfindung enthalten die Beschichtungsversätze zumindest folgende Bestandteile:
- mindestens einen kristallinen, nicht schmelzenden mineralischen, feuerfesten Trägerrohstoff
- mindestens zwei Glasurschmelze bildende Rohstoffe
- mindestens einen Haftvermittler
- ggf. mindestens ein Zusatzmittel (Additiv)
- ggf. mindestens ein Dispergiermittel (Verflüssiger)
- ggf. mindestens einen Sedimentationshemmer
- ggf. mindestens ein Antioxidans

Die nicht schmelzenden, kristallinen feuerfesten Trägerrohstoffe sind mineralische Rohstoffe in Mehlform, die einen über den Anwendungstemperaturen der erfindungsgemäßen Beschichtung liegenden Schmelzpunkt halben. Die Menge im Versatz richtet sich nach dem Zweck dieses Bestandteils, nämlich eine ausreichende Beständigkeit der aus dem Versatz in situ gebildeten Glasurschmelze gegen Abrasion und eine Viskosität der Schmelze zu gewährleisten, die ein Ablaufen der Glasur bei Einwirken von Schwerkraft verhindert. Die Korngröße der Trägerrohstoffe liegt vorzugsweise unter 250 µm, insbesondere unter 100 µm. Der Anteil an Trägerrohstoff im Versatz beträgt vorzugsweise 20 bis 60, insbesondere 30 bis 50 Gew.-%, bezogen auf die Trockensubstanz des Versatzes.

Der erfindungsgemäße Versatz enthält als derartigen Trägerrohstoff, z. B. mindestens einen Rohstoff, der ausgewählt ist aus der folgenden Gruppe: Kerphalit, Tonerde, SiC, Porzellanmehl, mineralische feuerfeste Regenerate wie z. B. Korundregenerate, SiC-Regenerate, Zirkonsifikatregenerate; Schamotteregenerate sowie Quarzmehl, Kyanit, Sillimanit, Andalusit, Schamotte. Bevorzugt werden im Anwendungsbereich sich dehnende Rohstoffe, wie Mullit bildende Rohstoffe, die sich während des Aufheizens dehnen.

Erfingdungsgemäß verwendete, Glasurschmelze bildende, mehlförmige Rohstoffe sollen zwischen etwa 400 und 1300 °C eine Glasurschmelze bilden. Bevorzugt werden Glasurschmelze bildende Phosphate, insbesondere Alkaliphosphate und/oder borfreie und bleifreie Glasurfritten und/oder Feldspäte, insbesondere Alkalifeldspäte, und/oder Serpentin und/oder Kryolith od. dgl. Natrium- oder Kaliumverbindungen.

Dabei werden nach einer Ausführungsform der Erfindung bei niedrigen Temperaturen, z. B. zwischen 200 und 600 °C Glasurschmelze bildende Rohstoffe, z. B. mindestens ein Phosphat, insbesondere Alkaliphosphate, und/oder mindestens eine entsprechende borfreie und bleifreie Fritte kombiniert mit mindestens einem bei höheren Temperaturen, z. B. zwischen 600 und 1100 °C Glasurschmeize bildenden Rohstoff, z. B. mit mindestens einem Feldspat, insbesondere Alkalifeldspat und/oder mindestens einer entsprechenden Fritte und/oder Serpentin und/oder Kryolith, so dass während des Aufheizens laufend bzw. kontinuierlich Schmelzphasen gebildet werden, die die Beschichtung im angewendeten Temperaturbereich der Aufheizung porenfrei und rissefrei halten, indem sie auch mit der Wärmedehnung der beschichteten feuerfesten Auskleidung mitgehen.

Ein erfindungsgemäßer Versatz enthält die Glasurschmelze bildenden Rohstoffe vorzugsweise in Mengen zwischen 20 und 60, insbesondere zwischen 35 und 45 Gew.-%, bezogen auf die Trockensubstanz des Versatzes. Die Korngröße der mehlfeinen, Glasurschmeize bildenden Rohstoffe beträgt z. B. maximal 200 µm, insbesondere maximal 100 µm.

Die erfindungsgemäß verwendeten Trägerrohstoffe und Glasurschmelze bildenden Rohstoffe - im Folgenden auch Glasurrohstoffe genannt - sind auf dem Markt erhältlich und können vom Fachmann anhand von von den Herstellern erstellten Datenblättern für die Zwecke der Erfindung entsprechend ausgewählt werden.

Ein weiterer wesentlicher Bestandteil des erfindungsgemäßen Versatzes ist mindestens ein Haftmittel - im Folgenden auch Haftvermittler genannt - das die Haftung einer mit Flüssigkeit, z. B. Wasser, aus einem erfindungsgemäßen Versatz angemachten Beschichtung auf der Oberfläche eines feuerfesten Erzeugnisses beim Auftragen und Beginn des Aufheizens, insbesondere bis zur Bildung einer Glasschmelzphase, gewährleistet. Anschließend kann die Klebrigkeit der Glasurschmelze die Haftung übernehmen. Insbesondere eignet sich als Haftmittel eine Carboxymethylcellulose, z. B. Natriumcarboxymethylcellulose. Die Haftvermittler werden vorzugsweise in Mengen zwischen 0,05 und 1,0, insbesondere zwischen 0,1 und 0,6 Gew.-%, bezogen auf die Trockensubstanz des erfindungsgemäßen Beschichtungsversatzes verwendet. Weitere bevorzugte Haftvermittler sind Polyarylsulfonat, Dextrin, Relatin bzw. Tylose. Die Haftvermittler werden einzeln oder in Kombination mit mindestens einem anderen Haftvermittler verwendet.

Die Carboxymethylcellulose wirkt in überraschender Weise synergistisch. Sie sorgt für die Haftung auf der Oberfläche des feuerfesten Erzeugnisses beim Auftragen. Beim Aufheizen verbrennt sie dann bei relativ niedrigen Temperaturen zwischen z. B. 150 und 220 °C und bildet dabei Poren, die das aus dem feuerfesten Erzeugnis auszutreibende Wasser durch die Beschichtung diffundieren lassen. Die Poren werden von Schmelzphasen der Glasurschmelze bildenden Rohstoffe verschlossen, so dass dann die Beschichtung porenfrei wird und rissefrei bleibt. Dabei sind die Glasurschmelze bildenden Rohstoffe so ausgewählt, dass mindestens einer der Rohstoffe ausreichende Schmelzphase bildet in einem Temperaturbereich, in dem der Kohlenstoff des feuerfesten Erzeugnisses zu oxidieren beginnen würde. Die Schmelzphase hat dann in diesem Temperaturbereich bereits eine geschlossene Beschichtung gebildet, die verhindert, dass Luft bzw. Luftsauerstoff bis zum feuerfesten Erzeugnis vordringen kann.

Die Carboxymethylcellulose gewährleistet außerdem in überraschender Weise die Haftung auch auf öligen Oberflächen von z. B. entschalten Feuerbetonen, deren Oberfläche noch Reste von Schalöl aufweisen, so dass die Beschichtung zur Lösung dieses Problems keine weiteren Additive benötigt. Des Weiteren gewährleistet die Carboxymethylcellulose eine sehr gute Haftung der Beschichtung auf hochverdichteten Formkörpern, die herstellungsbedingt sehr glatte und Kohlenstoff enthaltende Oberflächen aufweisen.

Ein weiteres zweckmäßiges optionales Additiv ist mindestens ein mehlförmiger, feuerfester Bindeton, mit dem die Bildsamkeit bzw. Verarbeitbarkeit des mit Flüssigkeit, z. B. Wasser angemachten erfindungsgemäßen Versatzes und die Grünfestigkeit der Beschichtung eingestellt werden kann. Besonders geeignet sind Bentonite und/oder illitische und/oder käolinitische und/oder montmorillonitische Tone und/oder Mischungen daraus. Die Bindetone werden ebenfalls in Mehlform und vorzugsweise in Mengen zwischen 2 und 20, insbesondere zwischen 10 und 18 Gew.-%, bezogen auf die Trockensubstanz des Versatzes, verwendet. Die maximale Korngröße der Bindetone beträgt z. B. 63 µm, insbesondere 6,3 µm.

Ein weiteres zweckmäßiges optionales Additiv ist mindestens ein, insbesondere mehlförmiger trockener, Verflüssiger, der die Reduzierung des Anmachwassers in an sich bekannter Weise ermöglicht. Verwendet wird vorzugsweise ein Natriumphosphat und/oder Carboxylesther und/oder Dispergiertonerden und/oder Polyphosphat, z. B. Natriumpolyphosphat (LITHOPIX) und/oder Sulfonat und/oder Hydrocarbonsäure, z. B. auch Polycarboxylatether (CASTAMENT), z. B. in Mengen zwischen 0,05 und 1, insbesondere zwischen 0,1 und 0,8 Gew.-%, bezogen auf die Trockensubstanz des Versatzes.

Zudem kann optional zweckmäßigerweise als Additiv mindestens ein Sedimentationshemmer verwendet werden, der die homogene Verteilung der Bestandteile in der mit Flüssigkeit, insbesondere Wasser angemischten Beschichtungsfrischmasse über einen längeren Zeitraum gewährleistet. Geeignet sind z. B. natürliche Verdickungsmittel wie Polysaccharide, insbesondere Xanthan und/oder Bindemittel für Glasuren, z. B. in Form von Polymeren in wässrigen Lösungen (z. B. OPTAPIX) und/oder Suspensionsstabilisierer für Glasuren, z. B. in Form von Hydrokolloidzubereitungen (z. B. PEPTAPON), und/oder Cellulosefasern (CELLOTIN), z. B. in Mengen zwischen 0,01 und 0,5, insbesondere zwischen 0,01 und 0,05, bezogen auf die Trockensubstanz des Versatzes.

Außerdem kann ein erfindungsgemäßer Versatz mindestens ein an sich bekanntes Antioxidans, insbesondere in Form von metallischem Silizium oder Aluminium enthalten. Die Antioxidantien erhöhen auch die Festigkeit des feuerfesten Produkts und vermindern dessen offene Porosität neben ihrer die Oxidation des Kohlenstoffs vermindernder Wirkung.

Es liegt im Rahmen der Erfindung, den erfindungsgemäßen Versatz nicht nur insgesamt in Mehlform zusammenzustellen, sondern auch als Gebinde, in dem flüssige von pulverförmigen Bestandteilen getrennt verpackt vorliegen. Insbesondere kann mindestens ein Additiv in flüssiger Form vorhanden sein.

Die folgende Tabelle enthält bevorzugte Zusammensetzungen von erfindungsgemäßen Versätzen:

| Rohstoff/Additiv | Gehalte (Gew.-%) |
|---|---|
| mindestens einen feuerfesten Trägerrohstoff | 25 bis 69,5, insbesondere 40 bis 68 |
| mindestens zwei Glasurschmelze bildende Rohstoffe | 30 bis 74, insbesondere 31,9 bis 59,4 |
| mindestens einen Haftvermittler, insbesondere Carboxylmethylcellulose | 0,05 bis 1, insbesondere 0,1 bis 0,6 |
| mindestens einen Bindeton | 0 bis 20, insbesondere 2 bis 18 |
| mindestens einen Verflüssiger (Dispergiermittel) | 0 bis 1,0, insbesondere 0,1 bis 0,8 |
| mindestens einen Sedimentationshemmer | 0 bis 0,5, insbesondere 0,1 bis 0,05 |
| mindestens ein Antioxidans | 0 bis 2,0, insbesondere 3 bis 10 |

Mit der Erfindung ist es gelungen, einen Beschichtungsversatz zu schaffen, der einen wirksamen Oxidationsschutz für Kohlenstoff/SiC-haltiger Feuerfesterzeugnisse gewährleistet während einer unabdingbaren Aufheizphase in einer oxidierenden Atmosphäre. Besondere Anwendungen finden die erfindungsgemäßen Beschichtungsversätze bei feuerfesten Erzeugnissen aus Feuerbetonen, z. B. bei Neuauskleidungen und Teilreparaturen von Rinnensystemen von Roheisenerzeugungsanlagen. Diese Rinnensysteme werden mit Kohlenstoff haltigen und/oder SiC-haltigen Feuerbetonen ausgekleidet. Nach einer derartigen Neuzustellung bzw. Neuauskleidung bzw. Reparatur wird die Rinne mit Gaslanzen aufgeheizt. Dieser Aufheizvorgang geschieht in den Hüttenwerken in Temperaturbereichen von etwa 400 bis 1200 °C in Luftatmosphäre.

Die Erfindung ist auch anwendbar z. B. in einer Stahlpfanne oder einem Konverter nach einer Neuzustellung mit MgO-C-Steinen. Das Aufheizen der Auskleidung aus MgO-C-Steinen in der Stahlpfanne erfolgt z. B. mit Regenerativbrennern in einer Sauerstoff enthaltenden Atmosphäre. Die Anwendung der Erfindung kann erfolgen, indem entweder die Neuzustellung mit der erfindungsgemäßen Beschichtung versehen wird oder es werden bereits im Herstellerwerk die Auskleidungssteine mit der erfindungsgemäßen Beschichtung ausgerüstet.

Bei feuerfesten geformten und ungeformten Produkten wird durch die erfindungsgemäße Schutzbeschichtung der Kohlenstoffabbrand reduziert. Dadurch erhöht sich die Schlackenresistenz der Feuerfest-Materialien. Bei den geformten Produkten wird durch den verminderten Kohlenstoffabbrand zusätzlich die Bindematrix geschützt bzw. aufrechterhalten. Ebenso werden die geformten Produkte, welche bei Kontamination mit Luftfeuchte zur Brucitbildung neigen, vor dieser Gefahr geschützt. Bei beiden Produkten wird eine Erhöhung der Grünfestigkeit erreicht. Das heißt, nach Behandlung mittels Oxidationsschutz und Trocknung der Bauteile bzw. Aggregate entstehen höhere Kanten- und Eckfestigkeiten. Dies ist insbesondere wichtig, wenn die Aggregate mittels z. B. Hallenkran transportiert werden müssen (Kipprinne).

Wird eine Stahlpfanne (E-Ofen) nach einer Neuzustellung mit MgO-C Steinen erstmalig in Betrieb genommen, so werden bei der Herstellung von bestimmten Edelstahlsorten die ersten Chargen dieser hierin gefertigten Schmelze bewusst abgewertet. Dies ist aus qualitativen Gründen erforderlich, da beim ersten Aufheizen und Schmelzen Kohlenstoffbestandteile der FF Auskleidung in die Stahlschmelze diffundieren können und somit die Edelstahlgüte herabsetzen. Die erfindungsgemäße Schutzglasur trägt dazu bei, dieses Problem zumindest zu reduzieren und somit zu einer Qualitätssteigerung der Edelstahlgüte beizutragen.

Das Aufheizen von MgO-C ausgekleideten Stahlpfannen erfolgt zunehmend mit sog. Regenerativbrennern. Regenerative Brenner werden immer paarweise eingesetzt. Bei diesem Prinzip feuert ein Brenner in den Brennraum. Der in der Regel gegenüberliegende zweite Brenner saugt die Ofenraumatmosphäre an und leitet die heißen Abgase über ein Speichermedium. Nach festgelegten Zykluszeiten wird umgeschaltet und die kalt angesaugte Verbrennungsluft wird über das heiße Speichermedium vorgewärmt und dann dem Brenner zugeführt. Hinsichtlich ökologischer und ökonomischer Aspekte ist die Verwendung dieser Brennertypen durchaus als sinnvoll einzustufen, hinsichtlich der massiven punktuellen thermischen Belastung der FF Materialien sind diese Brenner eher als negativ zu bewerten. Der für die Schlackenabweisung dringend benötigte Kohlenstoff wird vorzeitig herausgebrannt und steht dem Prozess nicht mehr zur Verfügung, wodurch Minderhaltbarkeiten zu erwarten sind. Andererseits werden diese kohlenstoffhaltigen Verbrennungsrückstände in die Regenerativbrenner eingezogen und müssen hier mit Sauerstoffüberschuss über eine Nachverbrennung geführt werden, um anschließend wieder in den Ofenraum zu gelangen. Aufgrund des Sauerstoffüberschusses wird somit nochmals das Reaktionspotential zum MgO-C Stein erhöht. Auch hier entschärft eine erfindungsgemäße Schutzglasur diesen Prozess tendenziell erheblich. MgO-C Steine sind Teer- oder Phenolharzgebunden. Wird bereits während der Inbetriebnahme der Pfanne, also bei der Erstaufheizung, der Kohlenstoff z. T. ausgebrannt, so wird nicht nur das Anti Wetting Additiv vorzeitig ausgetrieben, sondern es geht gleichzeitig die Bindephase verloren. Bei tonerdereichen FF Betonen geht bei dieser Beanspruchung zwar das Anti Wetting Additiv verloren und hinterlässt ein erhöhtes Porenraumvolumen, die hydraulische bzw. chemische Bindephase bleibt hingegen intakt. Die Notwendigkeit MgO-C Steine zu schützen, ist somit wenigstens ebenso wichtig wie der Schutz der tonerdereichen Kohlenstoff enthaltenden FF Betone. In beiden Fällen schaffen erfindungsgemäße Beschichtungen drastische Abhilfe.

Die Erfindung betrifft somit einen Beschichtungsversatz für eine Oxidationsschutzbeschichtung der Oberfläche von Kohlenstoff- und/oder SiC-haltige feuerfeste Erzeugnisse aufweisenden Neuzustellungen von Aggregaten für thermische Prozesse, wie Schmelz-, Brenn-, Wärmebehandlungs- oder Schmelz-Transportaggregaten, z. B. von Metallschmelze aufnehmenden Aggregaten wie Stahlpfannen oder Rinnensysteme der Roheisenerzeugung, wobei die Versätze so eingestellt sind, dass die Beschichtung daraus lediglich während der Dauer der unabdingbaren z. B. gasbefeuerten, in Sauerstoff enthaltender Atmosphäre ablaufenden Aufheizphase vor der eigentlichen Inbetriebnahme der Aggregate oxidationsschützend wirksam ist, wobei der Versatz bor- und bleifrei ist und mindestens enthält:
- mindestens einen im Anwendungstemperaturbereich feuerfesten mehlförmigen Trägerrohstoff aus einem feuerfesten Werkstoff
- mindestens einen ersten mehlförmigen bei relativ niedriger Temperatur zwischen 200 und 600 °C Glasurschmelze bildenden mineralischen Rohstoff und mindestens einen zweiten mehlförmigen bei höherer Temperatur bis 1300°C, insbesondere zwischen 600 und 900 ° C Glasurschmelze bildenden mineralischen Rohstoff in Form mindestens einer silikatischen Glasurfritte und/oder mindestens eines Feldspats und/oder Serpentins und/oder Kryoliths oder dergleichen Natrium- oder Kaliumverbindung
- mindestens einen Haftvermittler geignet für das Haften der aus dem Versatz mit Flüssigkeit angemachten Frischmasse der Oxidationsschutzbeschichtung nach dem Auftragen
- optional mindestens ein mineralisches plastifizierendes Bindemittel wie Bindeton
- optional mindestens ein die Frischmasse verflüssigendes Zusatzmittel
- optional mindestens ein die Sedimentation der Bestandteile der Frischmasse hemmendes Zusatzmittel.
- optional mindestens ein Antioxidans.

Vorteilhaft ist wenn der Haftvermittler mindestens eine Carboxymethylcellulose, insbesondere mindestens eine Alkalicarboxymethylcellulose und/oder ein Polyarylsulfonat und/oder Dextrin und/oder Relatin bzw. eine Tylose ist, insbesondere aber eine Carboxymethylcellulose ist.

Vorteilhaft ist ferner, wenn der erste eine Glasurschmelze bildende Rohstoff mindestens ein Phosphat, insbesondere mindestens ein Alkalipolyphosphat ist.

Vorteilhaft ist außerdem, wenn der Bindeton ein Bentonit und/oder mindestens ein illitischer und/oder kaolinitischer und/oder montmorilionitischer Ton und/oder eine Mischung daraus ist.

Es ist zudem zweckmäßig, wenn das verflüssigende Zusatzmittel mindestens ein an sich bekanntes verflüssigendes Sulfonat und/oder Polycarboxylat und/oder Hydrocarbonsäure und/oder Polyphosphat und/oder Dispergiertonerde und/oder Natriumphosphat und/oder Carboxylesther und/oder Polycarboxylatether ist.

Vorteilhaft ist, wenn das sedimentationshemmende Zusatzmittel mindestens ein Polysaccharid, insbesondere ein Xanthan, und/oder ein Bindemittel für Glasuren und/oder ein Suspensionsstabilisierer für Glasuren und/oder Cellulosefasern ist.

Des Weiteren ist vorteilhaft, wenn der feuerfeste Trägerrohstoff Kerphalit und/oder Tonerde und/oder Quarzmehl und/oder Porzellanmehl und/oder Kyanit und/oder Sillimanit und/oder Andalusit und/oder mindestens ein Regenerat aus der Gruppe Korund, SiC, Zirkon, Schamotte ist.

Vorteilhafte Versätze sind gekennzeichnet durch die folgenden Zusammensetzungen:

| Rohstoff/Additiv | Gehalte (Gew.-%) |
|---|---|
| mindestens einen feuerfesten Trägerrohstoff | 25 bis 69,5, insbesondere 40 bis 68 |
| mindestens zwei Glasurschmelze bildende Rohstoffe | 30 bis 74, insbesondere 31,9 bis 59,4 |
| mindestens einen Haftvermittler, insbesondere Carboxylmethylcellulose | 0,05 bis 1,0, insbesondere 0,1 bis 0,6 |
| mindestens einen Bindeton | 0 bis 20, insbesondere 2 bis 18 |
| mindestens einen Verflüssiger (Dispergiermittel) | 0 bis 1,0, insbesondere 0,1 bis 0,8 |
| mindestens einen Sedimentationshemmer | 0 bis 0,5, insbesondere 0,01 bis 0,05 |
| mindestens ein Antioxidans | 0 bis 2,0, insbesondere 3 bis 10 |

Die Verwendung eines mit Flüssigkeit angemachten erfindungsgemäßen Versatzes ist besonders vorteilhaft zur Beschichtung von Kohlenstoff- und/oder SiC-haltigen Feuerbetonzustellungen.

Die Verwendung eines mit Flüssigkeit angemachten erfindungsgemäßen Versatzes ist auch vorteilhaft zur Beschichtung von Zustellungen aus Kohlenstoff- und/oder SiC-haltigen geformten feuerfesten Erzeugnissen.

## Patentansprüche

1. Beschichtungsversatz geeignet für eine Oxidationsschutzbeschichtung der Oberfläche von Kohlenstoff- und/oder SiC-haltige feuerfeste Erzeugnisse aufweisenden Neuzustellungen von Aggregaten für thermische Prozesse, wie Schmelz-, Brenn-, Wärmebehandlungs- oder Schmelz-Transportaggregaten, z. B. von Metallschmelze aufnehmenden Aggregaten wie Stahlpfannen oder Rinnensystemen der Roheisenerzeugung, für die Dauer der unabdingbaren, z. B. gasbefeuerten, in Sauerstoff enthaltender . Atmosphäre ablaufenden Aufheizphase vor der eigentlichen Inbetriebnahme der Aggregate, wobei
der Versatz bor- und bleifrei ist und mindestens enthält:
- mindestens einen im Anwendungstemperaturbereich feuerfesten mehlförmigen Trägerrohstoff aus einem feuerfesten Werkstoff
- mindestens einen ersten mehlförmigen bei relativ niedriger Temperatur zwischen 200 und 600 °C Glasurschmelze bildenden mineralischen Rohstoff und mindestens einen zweiten mehlförmigen bei höherer Temperatur bis 1300 °C, insbesondere zwischen 600 und 900 °C Glasurschmelze bildenden mineralischen Rohstoff in Form mindestens einer silikatischen Glasurfritte und/oder mindestens eines Feldspats und/oder Serpentins und/oder Kryoliths oder dergleichen Natrium- oder Kaliumverbindung
- mindestens einen Haftvermittler geeignet für das Haften der aus dem Versatz mit Flüssigkeit angemachten Frischmasse der Oxidationsschutzbeschichtung nach dem Auftragen
- optional mindestens ein mineralisches plastifizierendes Bindemittel wie Bindeton
- optional mindestens ein die Frischmasse verflüssigendes Zusatzmittel
- optional mindestens ein die Sedimentation der Bestandteile der Frischmasse hemmendes Zusatzmittel
- optional mindestens ein Antioxidans.

2. Versatz nach Anspruch 1, wobei
der Haftvermittler mindestens eine Carboxymethylcellulose, insbesondere mindestens eine Alkalicarboxymethylcellulose, und/oder ein Polyarylsulfonat und/oder Dextrin und/oder Relatin bzw. eine Tylose ist, insbesondere aber eine Carboxymethylcellulose ist.

3. Versatz nach Anspruch 1 und/oder 2, wobei
der erste eine Glasurschmelze bildende Rohstoff mindestens ein Phosphat, insbesondere mindestens ein Alkalipolyphosphat und/oder eine mindestens borfreie und bleifreie Fritte ist.

4. Versatz nach einem oder mehreren der Ansprüche 1 bis 3, wobei
der zweite eine Glasschmelze bildende Rohstoff eine Glasurschmelze erst über 600 °C, insbesondere zwischen 600 und 900 °C bildet.

5. Versatz nach einem oder mehreren der Ansprüche 1 bis 4, wobei
der Bindeton ein Bentonit und/oder mindestens ein illitischer und/oder kaolinitischer und/oder montmorillonitischer Ton und/oder eine Mischung daraus ist.

6. Versatz nach einem oder mehreren der Ansprüche 1 bis 5, wobei
das verflüssigende Zusatzmittel mindestens ein an sich bekanntes, verflüssigendes Sulfonat und/oder Polycarboxylat und/oder Hydrocarbonsäure und/oder Polyphosphat und/oder Dispergiertonerde und/oder Natriumphosphat und/oder Carboxylesther und/oder Polycarboxylatether ist.

7. Versatz nach einem oder mehreren der Ansprüche 1 bis 6, wobei
das sedimentationshemmende Zusatzmittel mindestens ein Polysaccharid, insbesondere ein Xanthan, und/oder ein Bindemittel für Glasuren und/oder ein Suspensionsstabilisierer für Glasuren und/oder Cellulosefasern ist.

8. Versatz nach einem oder mehreren der Ansprüche 1 bis 7, wobei
der feuerfeste Trägerrohstoff Kerphalit und/oder Tonerde und/oder Quarzmehl und/oder Porzellanmehl und/oder Kyanit und/oder Sillimanit und/oder Andalusit und/oder mindestens ein Regenerat aus der Gruppe Korund, SiC, Zirkon, Schamotte ist.

9. Versatz nach einem oder mehreren der Ansprüche 1 bis 8, mit folgenden Zusammensetzungen:
| Rohstoff/Additiv | Gehalte (Gew.-%) |
|---|---|
| mindestens einen feuerfesten Trägerrohstoff | 25 bis 69,5, insbesondere 40 bis 68 |
| mindestens zwei Glasurschmelze bildende Rohstoffe | 30 bis 74, insbesondere 31,9 bis 59,4 |
| mindestens einen Haftvermittler, insbesondere Carboxylmethylcellulose | 0,05 bis 1,0, insbesondere 0,1 bis 0,6 |
| mindestens einen Bindeton | 0 bis 20, insbesondere 2 bis 18 |
| mindestens einen Verflüssiger (Dispergiermittel) | 0 bis 1,0, insbesondere 0,1 bis 0,8 |
| mindestens einen Sedimentationshemmer | 0 bis 0,5, insbesondere 0,01 bis 0,05 |
| mindestens ein Antioxidans | 0 bis 2,0, insbesondere 3 bis 10 |

10. Verwendung eines mit Flüssigkeit angemachten Versatzes nach einem oder mehreren der Ansprüche 1 bis 9 zur Beschichtung von Kohlenstoff- und/oder SiC-haltigen Feuerbetonzustellungen.

11. Verwendung eines mit Flüssigkeit angemachten Versatzes nach einem oder mehreren der Ansprüche 1 bis 9 zur Beschichtung von Zustellungen aus Kohlenstoff- und/oder SiC-haltigen geformten feuerfesten Erzeugnissen, insbesondere aus MgO-C Steinen.

## Claims

1. A coating batch suitable for an anti-oxidation coating of the surface of new linings of units for thermal processes, such as melting, firing, heat treatment or melt transport units, e.g. of units that accommodate molten metal, such as steel ladles or runner systems for pig iron production, said linings comprising carbon-containing and/or SiC-containing refractory products, for the duration of the indispensable, e.g. gas-fired, heat-up phase taking place in an oxygen-containing atmosphere before the actual commissioning of the units, wherein
the batch is free from boron and lead and contains at least the following:
- at least one powdery carrier raw material, which is refractory in the operating temperature range, comprising a refractory material
- at least one first powdery mineral raw material forming a glaze melt at a relatively low temperature of between 200 and 600°C and at least one second powdery mineral raw material forming a glaze melt at a higher temperature of up to 1300°C, in particular between 600 and 900°C, in the form of at least one silicate glaze frit and/or at least one feldspar and/or serpentine and/or cryolite or similar sodium or potassium compound
- at least one adhesion promoter suitable for the adhesion of the fresh mix of the anti-oxidation coating, comprising the batch mixed with liquid, after application
- optionally at least one mineral plasticising binder, such as bond clay
- optionally at least one additive liquefying the fresh mix
- optionally at least one additive inhibiting the sedimentation of the constituents of the fresh mix
- optionally at least one antioxidant.

2. The batch according to claim 1, wherein
the adhesion promoter is at least one carboxymethylcellulose, in particular at least one alkali carboxymethylcellulose, and/or a polyaryl sulfonate and/or dextrin and/or Relatin or a Tylose, but is in particular a carboxymethylcellulose.

3. The batch according to claim 1 and/or 2, wherein
the first raw material forming a glaze melt is at least one phosphate, in particular at least one alkali polyphosphate and/or an at least boronfree and lead-free frit.

4. The batch according to one or more of claims 1 to 3, wherein
the second raw material forming a glass melt forms a glaze melt only above 600°C, in particular between 600 and 900°C.

5. The batch according to one or more of claims 1 to 4, wherein
the bond clay is a bentonite and/or at least one illitic and/or kaolinitic and/or montmorillonitic clay and/or a mixture thereof.

6. The batch according to one or more of claims 1 to 5, wherein
the liquefying additive is at least one *per se* known, liquefying sulfonate and/or polycarboxylate and/or methanoic acid and/or polyphosphate and/or dispersed alumina and/or sodium phosphate and/or carboxyl esther and/or polycarboxylate ether.

7. The batch according to one or more of claims 1 to 6, wherein
the sedimentation-inhibiting additive is at least one polysaccharide, in particular a xanthan, and/or a binder for glazes and/or a suspension stabiliser for glazes and/or cellulose fibres.

8. The batch according to one or more of claims 1 to 7, wherein
the refractory carrier raw material is Kerphalite and/or alumina and/or quartz powder and/or porcelain powder and/or kyanite and/or sillimanite and/or andalusite and/or at least one reclaimed material from the group of corundum, SiC, zircon, fireclay.

9. The batch according to one or more of claims 1 to 8, with the following compositions:
| Raw material / additive | Contents (wt.%) |
|---|---|
| At least one refractory carrier raw material | 25 to 69.5, in particular 40 to 68 |
| At least two raw materials forming a glaze melt | 30 to 74, in particular 31.9 to 59.4 |
| At least one adhesion promoter, in particular carboxymethylcellulose | 0.05 to 1.0, in particular 0.1 to 0.6 |
| At least one bond clay | 0 to 20, in particular 2 to 18 |
| At least one liquefier (dispersant) | 0 to 1.0, in particular 0.1 to 0.8 |
| At least one sedimentation inhibitor | 0 to 0.5, in particular 0.01 to 0.05 |
| At least one antioxidant | 0 to 2.0, in particular 3 to 10 |

10. Use of a batch according to one or more of claims 1 to 9 mixed with liquid for coating carbon-containing and/or SiC-containing refractory concrete linings.

11. Use of a batch according to one or more of claims 1 to 9 mixed with liquid for coating linings made of carbon-containing and/or SiC-containing formed refractory products, in particular comprising MgO-C bricks.

## Revendications

1. Mélange de revêtement adapté pour un revêtement de protection contre l'oxydation de la surface de garnissages, présentant des produits ignifuges contenant du carbone et/ou du SiC, de groupes destinés à des processus thermiques, tels que des groupes de fusion, de combustion, de traitement thermique ou de transport de matière fondue, par exemple de groupes recevant de la matière fondue métallique, tels que des poêles en acier ou des systèmes de rigoles de la production de fonte brute, pour la durée de la phase de chauffage indispensable se déroulant dans une atmosphère contenant de l'oxygène, par exemple à gaz, avant la mise en service à proprement parler des groupes, dans lequel
le mélange est sans bore et sans plomb et contient au moins :
- au moins une matière première de support pulvérulente ignifuge dans la plage de températures d'application, composée d'un matériau ignifuge,
- au moins une première matière première minérale pulvérulente formant une matière fondue de glaçure à une température relativement basse comprise entre 200 et 600 °C et au moins une deuxième matière première pulvérulente minérale formant une matière fondue de glaçure à une température plus élevée allant jusqu'à 1300 °C, comprise en particulier entre 600 et 900 °C, se présentant sous la forme au moins d'une fritte de glaçure silicatée et/ou au moins d'un feldspath et/ou d'une serpentine et/ou d'une cryolite ou d'un composé de sodium ou de potassium similaire,
- au moins un agent promoteur d'adhérence adapté pour l'adhérence de la masse fraîche, gâchée avec du liquide à partir du mélange, du revêtement de protection contre l'oxydation après l'application,
- en option au moins un liant plastifiant minéral tel que de l'argile figuline,
- en option au moins un additif liquéfiant la masse fraîche,
- en option au moins un additif bloquant la sédimentation des composants de la masse fraîche,
- en option au moins un antioxydant.

2. Mélange selon la revendication 1, dans lequel
l'agent promoteur d'adhérence est au moins une cellulose de carboxyméthyle, en particulier au moins une cellulose d'alcalicarboxyméthyle, et/ou un sulfonate polyarylé et/ou une dextrine et/ou une relatine ou un tylose, est en particulier toutefois une cellulose de carboxyméthyle.

3. Mélange selon la revendication 1 et/ou 2, dans lequel
la première matière première formant une matière fondue de glaçure est au moins un phosphate, en particulier au moins un polyphosphate alcalin et/ou une fritte au moins sans bore et sans plomb.

4. Mélange selon l'une quelconque ou plusieurs des revendications 1 à 3, dans lequel
la deuxième matière première formant une matière fondue de glaçure forme une matière fondue de glaçure seulement à une température supérieure à 600 °C, en particulier à une température comprise entre 600 et 900 °C.

5. Mélange selon l'une quelconque ou plusieurs des revendications 1 à 4, dans lequel
l'argile figuline est une bentonite et/ou au moins une argile illitique et/ou kaolinitique et/ou montmorillonitique et/ou un mélange de ces dernières.

6. Mélange selon l'une quelconque ou plusieurs des revendications 1 à 5, dans lequel
l'additif liquéfiant est au moins un sulfonate liquéfiant connu en soi et/ou un polycarboxylate et/ou un acide formique et/ou un polyphosphate et/ou de l'alumine de dispersion et/ou du phosphate de sodium et/ou de l'esther de carboxyle et/ou un éther de polycarboxylate.

7. Mélange selon l'une quelconque ou plusieurs des revendications 1 à 6, dans lequel
l'additif bloquant la sédimentation est au moins un polysaccharide, en particulier un xanthane et/ou un liant pour des glaçures et/ou un agent stabilisant de suspension pour des glaçures et/ou des fibres de cellulose.

8. Mélange selon l'une quelconque ou plusieurs des revendications 1 à 7, dans lequel
la matière première de support ignifuge est une kerphalite et/ou une alumine et/ou une farine de quartz et/ou une farine de porcelaine et/ou une kyanite et/ou une sillimanite et/ou une andalousite et/ou au moins un produit de régénération choisi parmi le groupe : corindon, SiC, zirconium, chamotte.

9. Mélange selon l'une quelconque ou plusieurs des revendications 1 à 8, comprenant des composés qui suivent :
| Matière première/additif | Teneurs (% en poids) |
|---|---|
| Au moins une matière première de support ignifuge | 25 à 69,5, en particulier 40 à 68 |
| Au moins deux matières premières formant une matière fondue de glaçure | 30 à 74, en particulier 31,9 à 59,4 |
| Au moins un agent promoteur d'adhérence, en particulier une cellulose de carboxyméthyle | 0,05 à 1,0, en particulier 0,1 à 0,6 |
| Au moins une argile figuline | 0 à 20, en particulier 2 à 18 |
| Au moins un agent liquéfiant (agent de dispersion) | 0 à 1,0, en particulier 0,1 à 0,8 |
| Au moins un agent bloquant la sédimentation | 0 à 0,5, en particulier 0,01 à 0,05 |
| Au moins un antioxydant | 0 à 2,0, en particulier 3 à 10 |

10. Utilisation d'un mélange gâché avec un liquide selon l'une quelconque ou plusieurs des revendications 1 à 9 servant à revêtir des garnissages de béton réfractaire contenant du carbone et/ou du SiC.

11. Utilisation d'un mélange gâché avec un liquide selon l'une quelconque ou plusieurs des revendications 1 à 9 servant à revêtir des garnissages composés de produits ignifugés moulés contenant du carbone et/ou du SiC, en particulier de briques à base de MgO-C.
